(19) **Europäisches Patentamt / European Patent Office / Office européen des brevets**

(11) **EP 3 492 393 B1**

(12) **FASCICULE DE BREVET EUROPEEN**

(45) Date de publication et mention de la délivrance du brevet:
**21.09.2022 Bulletin 2022/38**

(21) Numéro de dépôt: **18208577.9**

(22) Date de dépôt: **27.11.2018**

(51) Classification Internationale des Brevets (IPC):
**B64F 5/60** *(2017.01)* **G01M 3/32** *(2006.01)*
**G01M 3/24** *(2006.01)*

(52) Classification Coopérative des Brevets (CPC):
**G01M 3/24; B64F 5/60; G01M 3/3263**

(54) **SYSTÈME ET PROCÉDÉ DE DÉTECTION AUTOMATISÉE DE BRUIT DE FUITE DANS UN AÉRONEF**

AUTOMATISCHES SYSTEM UND VERFAHREN ZUR DETEKTION VON LECKAGEGERÄUSCHEN IN EINEM LUFTFAHRZEUG

SYSTEM AND METHOD FOR AUTOMATED DETECTION OF SOUND LEAKAGE IN AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2017 FR 1761424**

(43) Date de publication de la demande:
**05.06.2019 Bulletin 2019/23**

(73) Titulaires:
• **Airbus Operations SAS**
**31060 Toulouse (FR)**
• **AIRBUS (SAS)**
**31700 Blagnac (FR)**

(72) Inventeurs:
• **LOCHERON, Marc**
**31100 TOULOUSE (FR)**
• **LEBRU, Stéphane**
**31490 LEGUEVIN (FR)**

(74) Mandataire: **Cabinet Le Guen Maillet**
**3, impasse de la Vigie**
**CS 71840**
**35418 Saint-Malo Cedex (FR)**

(56) Documents cités:
WO-A1-02/01175          WO-A1-2009/068057
GB-A- 2 331 152          US-A- 5 404 747
US-A1- 2016 091 387

**Description**

## DOMAINE DE L'INVENTION

La présente invention se rapporte au domaine des tests de bruit de fuite sur un aéronef et plus particulièrement, concerne une détection de bruit de fuite dans des zones d'intérêt de l'aéronef.

Avant d'être livré, un aéronef subit toute une série de tests et d'essais au sol et en vol parmi lesquels des tests de bruits de fuite. En effet, à un certain stade de développement, des tests de pressurisation sont réalisés sur l'aéronef au sol au cours desquels des compresseurs injectent de l'air à l'intérieur de l'aéronef pour augmenter la pression de la cabine. L'augmentation de la pression crée un gradient de pression entre la cabine et l'extérieur modélisant celui auquel l'aéronef est soumis en vol. Le gradient maximum atteint est égal au gradient maximum obtenu en vol augmenté d'une certaine marge de l'ordre de trente-trois pourcents. Une fois la pression stabilisée, des opérateurs s'approchent de l'aéronef pour l'inspecter manuellement depuis l'extérieur afin de détecter des bruits de fuite principalement au niveau de l'encadrement des portes.

Toutefois, pour des raisons de sécurité des opérateurs, la pressurisation de l'aéronef ne peut pas être augmentée au-delà d'un certain seuil. De ce fait, durant ces tests, le gradient de pression est représentatif de la phase de montée de l'aéronef mais pas de la phase de croisière où le gradient est beaucoup plus élevé. Ainsi, les tests au sol ne sont pas représentatifs de toutes les phases du vol et par conséquent ne prennent pas en compte l'évolution des bruits de fuite en fonction des différents gradients de pression. En outre, les tests au sol ne sont pas aisés et dépendent des conditions climatiques lors des essais. Par ailleurs, les tests manuels depuis l'extérieur de l'aéronef peuvent générer des détections de fuite non bruyantes qui ne sont pas très pertinentes vis-à-vis du confort acoustique de la cabine.

Par conséquent, des tests complémentaires de détection de bruits de fuite sont réalisés en vol. Au cours de ces tests en vol, des opérateurs navigants parcourent la cabine et enregistrent tout bruit anormal, dont les bruits de fuites. Une fois au sol, ces enregistrements sont dépouillés et analysés afin de détecter toute anomalie. Toutefois, ces essais en vol sont très coûteux et nécessitent beaucoup de temps pouvant affecter les contraintes de livraison de l'aéronef.

Le document US2016/091387 décrit un système et une méthode de détection de fuite dans un bâtiment ou un conteneur permettant de convertir des propriétés acoustiques acquises en information de fuite.

Le document WO2009/068057 décrit un appareil et une méthode pour effectuer un test de pressurisation consistant à pressuriser une structure de cabine d'avion et à ce qu'un opérateur inspecte la structure de la cabine pour détecter des fuites.

L'objet de la présente invention est de proposer un système de détection de bruit de fuite dans un aéronef, remédiant aux inconvénients précités, permettant une détection exhaustive et précise de bruit de fuite tout en évitant d'avoir recours à plusieurs tests en vol.

## OBJET ET RÉSUMÉ DE L'INVENTION

La présente invention vise un système de détection de bruit de fuite dans un aéronef selon la revendication 1.

Ce système permet de réaliser des tests au sol en toute sécurité et selon toute une gamme de pressurisation de la cabine en fixant le ou les dispositif(s) d'acquisition sur la ou les zone(s) d'intérêt et en contrôlant l'acquisition des données à partir du dispositif de surveillance depuis l'extérieur de l'aéronef. On notera que la gamme de pressurisation de la cabine est représentative des différentes phases du vol : montée, descente, et croisière correspondant à des gradients de pression de 0 à 9 psi environ.

Ces tests peuvent être réalisés très tôt dans le cycle de vie de l'aéronef évitant par conséquent de recourir à des tests répétitifs en vol. Ainsi, les défauts peuvent être réparés très tôt dans la vie de l'aéronef satisfaisant par conséquent les délais et contraintes liés à la livraison. De plus, ce système permet de détecter les fuites pertinentes qui font du bruit évitant ainsi les fausses détections. En outre, le même système de détection peut aussi être utilisé en vol pour faire une cartographie du bruit de toute la cabine.

Avantageusement, ledit au moins un dispositif d'acquisition est connecté audit dispositif de surveillance à travers un réseau sans-fils.

Les liaisons sans-fils permettent une installation et une synchronisation rapides et simples du système de détection et un transfert de données fiable et en temps réel tout en évitant d'utiliser un très long câblage.

Avantageusement, le dispositif de surveillance est configuré pour :

- réaliser une analyse spectrale des données d'acquisition relatives aux bruits courants formant ainsi des données spectrales d'acquisition,
- comparer lesdites données spectrales d'acquisition à des données spectrales de référence pour un même gradient de pression, et
- détecter, en fonction de ladite comparaison, tout bruit de fuite dans ladite au moins une zone d'intérêt suivant au moins une valeur de gradient de pression.

Le système permet de traiter et d'analyser automatiquement les données et de déterminer de manière autonome et en temps réel les anomalies liées aux bruits de fuites.

Ledit dispositif de surveillance est configuré pour déclencher automatiquement l'enregistrement de bruits par ledit au moins un dispositif d'acquisition à des valeurs de gradients de pression prédéterminées.

Ceci permet un enregistrement autonome à des gradients de pression pertinents sans aucune intervention.

Avantageusement, le système comporte un ensemble de dispositifs d'acquisition de bruit destinés à être installés sur un ensemble de zones d'intérêt correspondant de l'aéronef, chaque dispositif d'acquisition comporte un microordinateur et au moins un microphone, au moins un des dispositifs d'acquisition est équipé d'un capteur de pression pour mesurer la pression dans la cabine de l'aéronef, ledit dispositif d'acquisition équipé du capteur de pression étant configuré pour déterminer chaque gradient de pression courant en comparant la pression courante à une pression initiale mesurée avant la pressurisation de la cabine.

Ceci permet de détecter des bruits de fuites simultanément sur plusieurs zones d'intérêt de manière simple et rapide et permet de déterminer les gradients de pressions avec précision et de manière simple et rapide.

Avantageusement, chaque dispositif d'acquisition comporte un ensemble de microphones destinés à être agencés selon différents emplacements de contrôles de la zone d'intérêt et le dispositif de surveillance est configuré pour localiser l'emplacement présentant une anomalie en fonction des données d'acquisition de bruits provenant des différents microphones.

Ceci permet de faciliter la maintenance en localisant avec précision la région présentant une anomalie.

Avantageusement, ledit dispositif de surveillance comporte une interface graphique configurée pour indiquer la configuration de l'installation des dispositifs d'acquisition et microphones sur les différentes zones d'intérêt de l'aéronef ainsi que la connexion au réseau sans-fils et l'opérabilité de chacun des dispositifs d'acquisition et de chacun des microphones.

Ceci permet de vérifier la bonne connexion et le bon fonctionnement des différents éléments tout au long du test.

A titre d'exemple, chaque zone d'intérêt de l'aéronef correspond à une zone quelconque parmi les zones suivantes : porte passagers, porte cargo, fenêtre coulissante, en cockpit, ainsi que toute zone comportant un élément traversant une partie pressurisée de l'aéronef (par exemple des drains d'évacuation d'eau).

Avantageusement, le système comporte un support avec des bras articulés, ledit support étant destiné à être fixé sur la zone d'intérêt de l'aéronef et chaque bras articulé étant destiné à supporter un microphone.

Ceci permet de fixer les dispositifs d'acquisition de manière rapide et selon différentes configurations.

L'invention vise aussi un procédé de détection de bruit de fuite dans un aéronef selon la revendication 9.

Avantageusement, le procédé comporte les étapes suivantes :

- installation d'au moins un dispositif d'acquisition de bruit sur au moins une zone d'intérêt dans la cabine de l'aéronef, ledit dispositif d'acquisition comportant un ensemble de microphones agencés selon différents emplacements de contrôles de la zone d'intérêt correspondante,
- pressurisation de la cabine de l'aéronef selon une suite de gradients de pression,
- contrôle dudit au moins dispositif d'acquisition avec un dispositif de surveillance depuis l'extérieur de l'aéronef, ledit dispositif de surveillance étant connecté audit dispositif d'acquisition via un réseau, et
- analyse des données d'acquisition par le dispositif d'acquisition ou le dispositif de surveillance afin de détecter tout bruit de fuite dans les zones d'intérêt suivant différentes valeurs de gradient de pression.

Avantageusement, l'analyse des données d'acquisition comporte une corrélation des données d'acquisition avec des données de référence comprenant les étapes suivantes :

- association des données d'acquisition relatives aux bruits courants avec celles relatives au gradient de pression courant représentatif d'une grandeur de pressurisation de la cabine,
- réalisation d'une analyse spectrale des données d'acquisition relatives aux bruits courants formant ainsi des données spectrales d'acquisition,
- comparaison desdites données spectrales d'acquisition à des données spectrales de référence, et
- détection en fonction de ladite comparaison, tout bruit de fuite dans ladite au moins une zone d'intérêt suivant au moins une valeur de gradient de pression.

## BRÈVE DESCRIPTION DES DESSINS

D'autres particularités et avantages du système et du procédé selon l'invention ressortiront mieux à la lecture de la description faite ci-après, à titre indicatif mais non limitatif, en référence aux dessins annexés sur lesquels :

- la Fig. 1 illustre de manière schématique un système de détection de bruits de fuite dans un aéronef, selon un mode de réalisation de l'invention ;
- la Fig. 2 illustre de manière schématique un système de détection de bruits de fuite dans un aéronef, selon un mode de réalisation préféré de l'invention ;
- la Fig. 3 illustre de manière schématique et avec plus de détails le système de détection de bruits de fuite de la Fig. 2 ;
- la Fig. 4 illustre de manière schématique un procédé de détection de bruits de fuite dans un aéronef en relation avec les Figs. 2 et 3, selon un mode de réalisation préféré de l'invention ;
- la Fig. 5 illustre de manière schématique un support du système de détection, selon un mode de réalisation préféré de l'invention ;
- la Fig. 6 illustre un graphique affiché sur l'interface du dispositif de surveillance donnant une configuration générale des connexions, selon un mode réalisation de l'invention ; et
- la Fig. 7 illustre une valise de protection adaptée pour emballer le système de détection.

## DESCRIPTION DÉTAILLÉE DE MODES DE RÉALISATION

Le principe de l'invention est notamment d'automatiser la détection de bruits de fuite dans un aéronef permettant de réaliser des tests au sol à une pluralité de gradients de pression opérationnels.

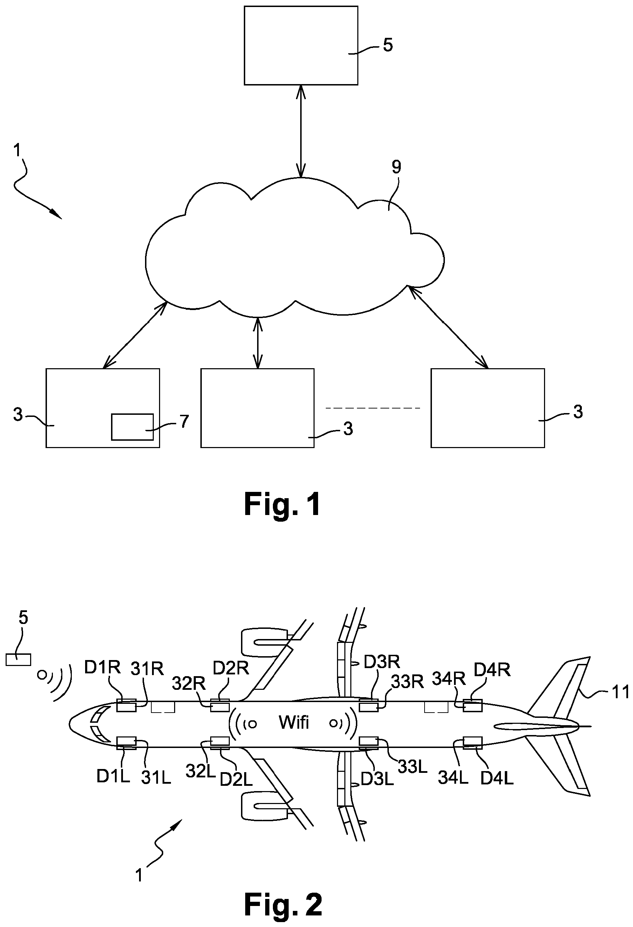

La Fig. 1 illustre de manière schématique un système de détection de bruits de fuite dans un aéronef, selon l'invention.

Conformément à l'invention, le système 1 de détection comporte au moins un dispositif d'acquisition 3 et un dispositif de surveillance 5. Le (ou les) dispositif(s) d'acquisition 3 est(sont) configuré(s) pour mesurer des bruits et au moins un des dispositifs d'acquisition 3 est en outre équipé d'un capteur de pression 7.

Plus particulièrement, chaque dispositif d'acquisition 3 est destiné à être installé sur une zone d'intérêt (par exemple au niveau d'une porte) de l'aéronef pour acquérir des données relatives à des bruits courants dans la zone d'intérêt. Le dispositif d'acquisition 3 équipé d'un capteur de pression 7 est en outre configuré pour acquérir des données relatives à un gradient de pression courant entre la cabine de l'aéronef et l'extérieur.

Le dispositif de surveillance 5 est configuré pour contrôler l'acquisition des données par le (ou les) dispositif(s) d'acquisition 3 et pour recevoir les données d'acquisition afin de détecter tout bruit de fuite dans la ou les zone(s) d'intérêt de l'aéronef. Ainsi, le système de détection permet non seulement d'enregistrer les bruits mais également de les traiter de manière autonome en relation avec les gradients de pression. En outre, le ou les dispositif(s) d'acquisition 3 est(sont) avantageusement connecté(s) au dispositif de surveillance 5 à travers un réseau 9 sans-fils.

La Fig. 2 illustre de manière schématique un système de détection de bruits de fuite dans un aéronef, selon un mode de réalisation de l'invention.

Selon ce mode de réalisation, le système de détection 1 comporte un dispositif de surveillance 5 et une pluralité de dispositifs d'acquisition 31R-34R et 31L-34L. Dans cet exemple, le système de détection 1 comporte huit dispositifs d'acquisition 31R-34R et 31L-34L destinés à équiper les huit portes D1R-D4R et D1L-D4L de l'aéronef 11. Bien entendu, le nombre de dispositifs d'acquisition 3 peut être quelconque et de même, la zone d'intérêt n'est pas limitée à une porte passagère ou d'équipage mais peut également être une fenêtre coulissante en cockpit, une porte cargo, ainsi que toute zone comportant un élément traversant la partie pressurisée de l'aéronef (par exemple des drains d'évacuation d'eau).

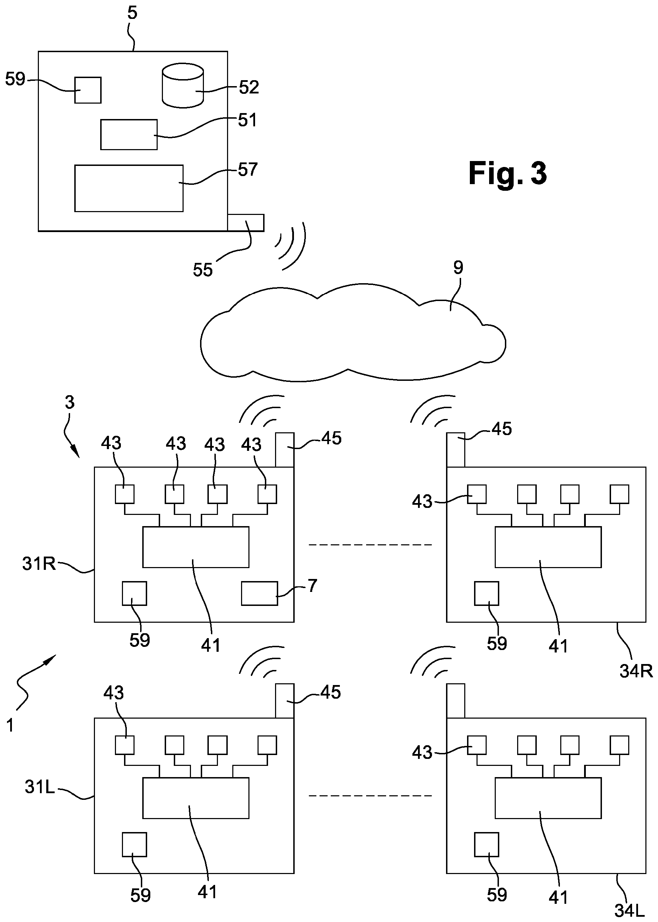

La Fig. 3 illustre de manière schématique mais avec plus de détails le système de détection de bruits de fuite de la Fig. 2.

Chaque dispositif d'acquisition 31R,...,34Lcomporte un microordinateur41 (par exemple de la taille d'une carte de crédit) et un ou plusieurs microphone(s) 43. Avantageusement, le dispositif d'acquisition 3 comporte plusieurs microphones 43 qui peuvent être agencés selon différents emplacements de contrôles de la zone d'intérêt. Par exemple, dans le cas d'une porte, un microphone 43 peut être placé au niveau de chaque coin de la porte. Chaque microphone 43 est par exemple configuré pour enregistrer des bruits jusqu'à environ 135dB. En outre, chaque dispositif d'acquisition 3 est équipé d'une antenne 45 wifi intégrée supportant par exemple une fréquence de quelques GHz adaptée pour des connexions pair-à-pair de n'importe quelle position à l'intérieur de la cabine et jusqu'à une large zone autour de l'aéronef 11. Par ailleurs, au moins un des dispositifs d'acquisition 31R est équipé d'un capteur de pression 7 pour mesurer la pression dans la cabine de l'aéronef 11.

Le dispositif de surveillance 5 comporte un microordinateur maître 51 (par exemple de la taille d'une carte de crédit) équipé d'une antenne 55 wifi et configuré pour contrôler les dispositifs d'acquisition 3 à travers un réseau 9 sans-fils. En outre, le dispositif de surveillance 5 comporte une interface graphique 57 adaptée pour indiquer la configuration de l'installation des dispositifs d'acquisition 3 et microphones 43 sur les différentes zones d'intérêt D1R-D4R et D1L-D4L de l'aéronef 11 ainsi que la connexion au réseau 9 sans-fils et l'état d'opérabilité de chacun des dispositifs d'acquisition 3 et de chacun des microphones 43. L'interface graphique 57 permet également à l'utilisateur de contrôler le système de détection en déclenchant des actions et en renseignant des informations concernant l'aéronef ou le procédé de détection.

Le dispositif de surveillance 5 comporte également une mémoire 52 pouvant par exemple être utilisée pour stocker des données concernant l'aéronef. En outre, chacun des dispositifs d'acquisition et de surveillance est en outre équipé d'une batterie d'alimentation 59.

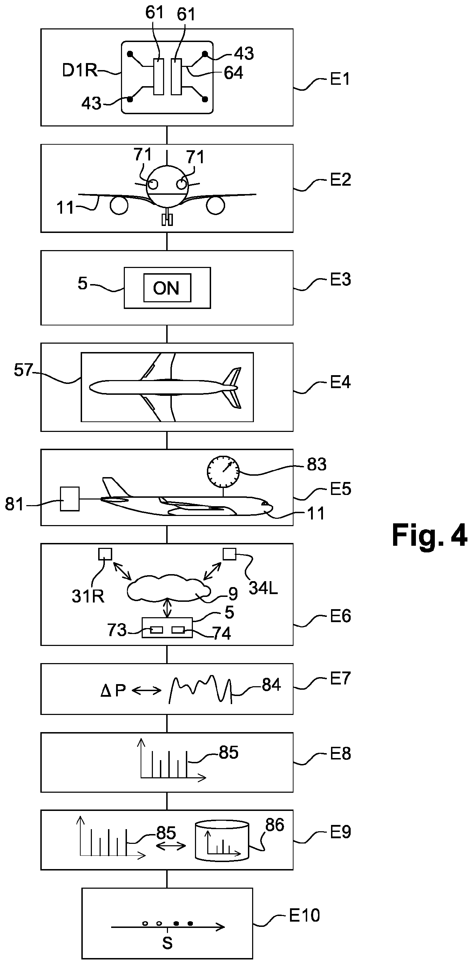

La Fig. 4 illustre de manière schématique un procédé de détection de bruits de fuite dans un aéronef en relation avec les Figs. 2 et 3, selon un mode de réalisation de l'invention.

Ce procédé concerne la détection de bruits de fuite dans un aéronef au sol et comporte des étapes d'installation du système de détection, de pressurisation de l'aéronef, et de traitement et d'analyse de données pour détecter les anomalies de fuites.

Les étapes E1 et E2 concernent l'installation du système de détection au cours de laquelle plusieurs dispositifs d'acquisition sont disposés à l'intérieur de l'aéronef aux niveaux des zones d'intérêt correspondantes.

Plus particulièrement, à l'étape E1, un (ou plusieurs) support(s) avec des bras articulés est(sont) fixé(s) au niveau de chaque porte D1R-D4R et D1L-D4L de l'aéronef 11.

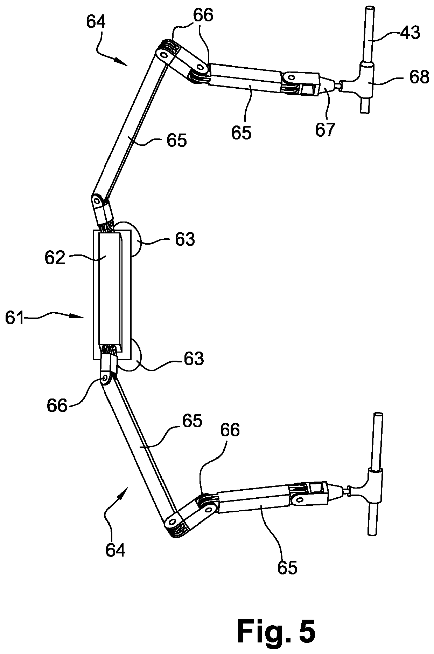

La Fig. 5 illustre de manière schématique un support du système de détection, selon un mode de réalisation de l'invention.

Le support 61 comporte un socle 62 muni des moyens de fixation 63 ainsi que de plusieurs bras 64 articulés. Chaque bras 64 articulé est composé de plusieurs segments 65 reliés linéairement entre eux par des liaisons pivots 66 ou rotules 67. Les liaisons peuvent être bloquées par des vis, écrous ou autres moyens de blocage. Une extrémité de chaque bras 64 articulé est fixée au socle 62 par une liaison pivot 66 et l'autre extrémité est reliée par une liaison rotule 67 à un élément de support ou de serrage 68 adapté pour supporter et tenir un microphone 43 selon tous les degrés de liberté. L'exemple de la Fig. 5 illustre un support 61 comportant deux bras 64 articulés pouvant ainsi supporter deux microphones 43 et les moyens de fixations 63 comportent deux ventouses adaptées pour adhérer fortement sur une surface solide comme celle de certains plans d'un aéronef 11.

Ainsi, deux supports 61 sont fixés sur chaque porte D1R-D4R et D1L-D4L de l'aéronef 11 et chacun des quatre bras 64 articulés porte un microphone 43. Les bras 64 sont articulés de sorte que chaque microphone 43 contrôle une région autour d'un coin correspondant de la porte D1R-D4R et D1L-D4L de manière à ce que toute la porte soit entièrement contrôlée par les quatre microphones 43 qui sont connectés à un même microordinateur 41.

A l'étape E2, des points d'accès Wifi 71 (par exemple deux point d'accès) selon un protocole de configuration dynamique DHCP (Dynamic Host Configuration Protocol) sont installés au niveau de l'aéronef 11 pour assurer des connexions sans-fils selon une configuration automatique des paramètres IP entre le dispositif de surveillance 5 disposé à l'extérieur de l'aéronef 11 et les différents dispositifs d'acquisition 3 placés à l'intérieur de l'aéronef 11. Ainsi, des adresses IP dynamiques sont automatiquement affectées aux différents dispositifs d'acquisition 3 tandis que le dispositif de surveillance 5 peut avoir une adresse IP statique.

L'étape E3 concerne la mise en marche du système de détection 1 comprenant l'initialisation et le réglage de paramètres des différents dispositifs d'acquisition 3 et de surveillance 5 ainsi que des points d'accès 71 Wifi.

A l'étape E4, l'interface graphique 57 du dispositif de surveillance 5 indique le schéma de l'installation des dispositifs d'acquisition 3 et des microphones 43 sur les différentes zones d'intérêt D1R-D4R et D1L-D4L de l'aéronef 11. L'interface graphique 57 indique également la connexion au réseau 9 sans-fils et l'état d'opérabilité de chacun des dispositifs d'acquisition 3 et de chacun des microphones 43.

En effet, l'interface graphique 57 affiche toutes les données concernant les connexions des différents éléments du système de détection ainsi que des données concernant l'aéronef. En effet, la mémoire 52 du dispositif de surveillance 5 permet à l'utilisateur de spécifier des données relatives à l'aéronef 11 testé.

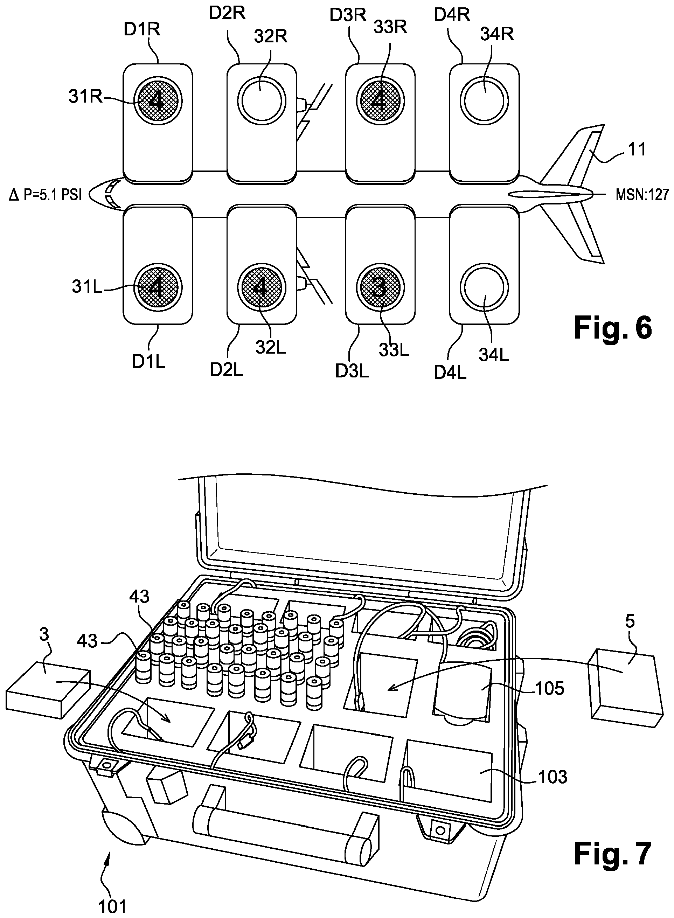

La Fig. 6 illustre un graphique affiché sur l'interface du dispositif de surveillance donnant une configuration générale des connexions, selon un mode réalisation de l'invention.

Selon cet exemple, l'interface 57 du dispositif de surveillance 5 comporte un écran tactile affichant un schéma de l'aéronef 11 inspecté et son identité (e.g. MSN 127) ainsi que les zones d'intérêt sélectionnées. Dans cet exemple, les zones d'intérêt correspondent aux portes de droite D1R-D4R et de gauche D1L-D4L de l'aéronef 11. Chaque dispositif d'acquisition 31R-34R et 31L-34L est représenté par un icone graphique circulaire affiché sur l'emplacement (i.e. la porte D1R-D4R, D1L-D4L) où il est installé. L'icône circulaire indique par sa couleur l'état de connexion du dispositif d'acquisition 31R-34R et 31L-34L et par un chiffre, le nombre de microphones 43 opérationnels dans cette zone. La pression à l'intérieur de l'aéronef 11 ainsi que le gradient de pression sont également affichées (e.g. ΔP=5.1 PSI) sachant qu'au départ le gradient de pression est nul. En outre, l'interface 57 comporte des boutons 73, 74 commandant les modes automatique et manuel respectivement (voir étape E6) ainsi qu'un bouton 75 relatif au réglage des paramètres et un bouton 76 de mise en marche.

Selon cet exemple, les dispositifs d'acquisition 31R, 33R, 31L et 32L placés aux niveaux des première et troisième portes de droite D1R, D3R ainsi qu'aux niveaux des première et deuxième porte de gauche D1L et D2L respectivement sont connectés et leurs microphones associés sont tous détectés comme étant opérationnels (ici indiqué par le chiffre 4). Le dispositif 33L placé au niveau de la troisième porte de gauche D3L est connecté et seulement trois de ses microphones sont opérationnels. En revanche, les dispositifs 32R, 34R et 34L placés aux niveaux des deuxième et quatrième portes de droite D2R, D4R ainsi qu'au niveau de la quatrième porte de gauche D4L ne sont pas connectés. On notera qu'en cliquant sur une icône, l'utilisateur peut avoir plus d'information sur le dispositif d'acquisition correspondant.

A l'étape E5, la cabine de l'aéronef est pressurisée suivant plusieurs niveaux de gradients de pression pouvant atteindre environ 700 mbar modélisant ainsi toutes les phases du vol. En effet, le groupe auxiliaire de puissance APU (Auxiliary Power Unit) de l'aéronef ou éventuellement un système de compresseurs 81 externes du type GPU (Ground Power Unit) est utilisé pour injecter de l'air à l'intérieur de l'aéronef 11 augmentant ainsi la pression 83 de la cabine et créant par conséquent, un gradient de pression modélisant celui auquel l'aéronef 11 est soumis en vol.

A l'étape E6, les dispositifs d'acquisition 31R-34L sont contrôlés depuis l'extérieur via le dispositif de surveillance 5 à travers le réseau 9 sans-fils et à partir d'une zone se trouvant à une distance de sécurité suffisante de l'aéronef 11. Le contrôle et la détection des bruits de fuite peuvent être réalisés selon un mode manuel ou automatique.

En mode manuel 73, l'utilisateur contrôle le démarrage ou l'arrêt de l'enregistrement par les différents dispositifs d'acquisition 31R-34L. Par exemple, en déclenchant simultanément le démarrage des huit dispositifs d'acquisitions 31R-34L équipés chacun de quatre microphones 43, l'utilisateur peut récupérer « 32 » fichiers audio permettant la détection de bruits en temps réel sur le dispositif de surveillance 5 via le réseau 9 sans-fils.

En mode automatique 74, le dispositif de surveillance 5 transmet des signaux de déclenchement (par exemple, de manière régulière) aux différents dispositifs d'acquisition 31R-34L pour déclencher le démarrage des enregistrements. A titre d'exemple, les signaux de déclenchement sont transmis toutes les deux minutes et chaque signal de déclenchement est adapté pour commander les dispositifs d'acquisition 31R-34L afin de réaliser un enregistrement automatique pendant dix secondes. Par ailleurs, chaque dispositif d'acquisition 31R-34L étant équipé d'une batterie 59 est adapté pour enregistrer les bruits relatifs à sa zone d'intérêt et peut éventuellement réaliser de manière autonome un traitement et une analyse de ses enregistrements. Des fichiers comportant les enregistrements courants de chacun des dispositifs d'acquisition 31R-34L et les gradients de pression correspondant aux enregistrements ainsi qu'éventuellement les analyses de ces enregistrements sont automatiquement transmis au dispositif de surveillance 5. Ce dernier stocke les fichiers reçus depuis les différents dispositifs d'acquisition 31R-34L dans sa mémoire 52.

En variante, le dispositif de surveillance 5 est configuré pour déclencher automatiquement l'enregistrement de bruits par les dispositifs d'acquisition 31R-34L à des valeurs de gradients de pressions prédéterminés par exemple à 300 mbar, 350 mbar, 450 mbar, 500 mbar, 550 mbar, 600 mbar, 650 mbar, etc. représentatives des phases de vol à différents altitudes. En effet, le dispositif d'acquisition 31R équipé du capteur 7 de pression détermine chaque gradient de pression courant en comparant la pression courante à la pression initiale mesurée avant la pressurisation de la cabine. Chaque valeur de gradient de pression est transmise au dispositif de surveillance 5. Ce dernier envoie alors un signal de déclenchement aux dispositifs d'acquisition 31R-34L pour enregistrer les bruits à chaque fois que le gradient de pression atteint un niveau pertinent préenregistré dans sa mémoire 52.

Aux étapes E7-E10, le dispositif de surveillance 5 est configuré pour traiter les données reçues depuis les différents dispositifs d'acquisition 31R-34L afin de détecter des bruits de fuite. Ces étapes permettent de corréler les données d'acquisition avec des données de référence.

Plus particulièrement, à l'étape E7, le dispositif de surveillance 5 est configuré pour associer les données d'acquisition 84 relatives aux bruits courants avec celles relatives au gradient de pression $\Delta$P courant représentatif de la grandeur de pressurisation de la cabine.

A l'étape E8, le dispositif de surveillance 5 est configuré pour réaliser une analyse spectrale des données d'acquisition relatives aux bruits courants captés par les microphones 43 de chacun des dispositifs d'acquisition 31R-34L formant ainsi des données spectrales d'acquisition 85. Chaque spectre peut être calculé de manière classique selon un traitement numérique de signal en utilisant par exemple la transformation de Fourier rapide FFT (Fast Fourier Transform). On s'intéresse par exemple à une certaine gamme de fréquence entre 4kHz et 12kHz selon une métrique par bande de tiers d'octave.

Plus particulièrement, pour chaque enregistrement de bruit réalisé par chaque microphone 43, on détermine un temps d'interruption stationnaire (non pollué par des évènements transitoires). Ensuite, on calcule une valeur moyenne $SIL_{special}$ par bande de tiers d'octave centrée par exemple sur des fréquences de 4kHz, 8kHz et 16kHz selon la formule suivante :

$$SIL_{special} = \frac{Loctave_{4kHz} + Loctave_{8kHz} + Loctave_{16kHz}}{3}$$

A l'étape E9, le dispositif de surveillance 5 est configuré pour comparer les données spectrales d'acquisition 85 à des données spectrales de référence préenregistrées dans une base de données 86 comprenant des enregistrements connus de bruits de fuite émanant des zones analogues aux zones d'intérêt (ici, les portes de l'aéronef). Plus particulièrement, on compare les valeurs moyennes $SIL_{special}$ à des valeurs moyennes de référence $SIL_{ref}$ déterminées par bande de tiers d'octave centrée sur une même gamme de fréquences à partir d'une base de données d'apprentissage comprenant des enregistrements de bruits de fuites connues et obtenus dans les mêmes contextes. Autrement dit, les comparaisons sont réalisées pour des mêmes valeurs de gradients de pression et pour des mêmes emplacements de contrôle. Par exemple, la valeur moyenne $SIL_{special}$ obtenue à un gradient de pression donné par un microphone installé au niveau d'un coin en haut à droite d'une porte donnée est comparée à une valeur moyenne de référence $SIL_{ref}$ obtenue à la même valeur de gradient de pression et pour le même emplacement.

A l'étape E10, le dispositif de surveillance 5 est configuré pour détecter en fonction de la comparaison, tout bruit de fuite dans chaque zone d'intérêt suivant chaque valeur de gradient de pression. En effet, si l'écart entre les données spectrales d'acquisition 85 et les données spectrales de référence 86 dépasse un seuil S prédéterminé, alors la zone d'intérêt correspondante est considérée comme présentant un bruit de fuite et nécessite une inspection et éventuellement une réparation.

Avantageusement, certains types de réparations seront corrélés avec certains types de défauts de fuite ayant des caractéristiques spectrales bien identifiées.

Plus particulièrement, le dispositif de surveillance 5 est configuré pour localiser l'emplacement présentant une anomalie en fonction des données d'acquisition de bruits provenant des différents microphones 43. Ainsi, l'anomalie est localisée avec précision selon l'emplacement de contrôle couvert par le microphone 43 qui a capté le bruit de fuite. Ceci permet d'identifier la porte défectueuse et en détectant la déviation par rapport au seuil S pour chaque microphone, on peut identifier avec plus de précision la zone défectueuse de la porte. Les résultats sont reportés directement en temps réel sur l'écran tactile 57 du dispositif de surveillance 5.

On notera qu'en variante, les étapes E8-E10 concernant le traitement numérique spectral, la comparaison des données spectrales d'acquisition à des données spectrales de référence ainsi que la détection des bruits de fuite peuvent être réalisées individuellement de manière automatique par chacun des dispositifs d'acquisition 31R-34L et les résultats d'analyse sont transmis en temps réel au dispositif de surveillance 5.

Avantageusement, les différents enregistrements et analyses sont stockés par le dispositif de surveillance 5 dans des moyens de stockages fixes et/ou amovibles. Ces données peuvent ensuite être téléchargées dans un serveur dédié pour réaliser des statistiques et pour enrichir les données spectrales de référence.

Avantageusement, le système de détection 1 peut aussi être utilisé en vol pour faire une cartographie du bruit de toute la cabine. En effet, une fois le système installé dans l'aéronef 11, il suffit d'un seul opérateur pour cartographier de manière rapide et efficace toute la cabine.

La Fig. 7 illustre une valise de protection adaptée pour y ranger le système de détection.

La valise 101 de protection est de de type PELI, facile à transporter et comporte des cellules ou cases de rangement 103 adaptées pour accueillir le dispositif de surveillance 5, les dispositifs d'acquisition 3, et les microphones 43 du système de détection 1. En effet, chaque élément du système de détection 1 présente une taille qui n'excède pas la taille d'un téléphone portable permettant ainsi d'emballer tout le système de détection de manière compacte et sécurisée dans la valise 101.

En outre, la valise 101 comporte un système d'alimentation 105 électrique adapté pour charger le dispositif de surveillance 5 et les différents dispositifs d'acquisition 3.

## Revendications

1. Système de détection de bruit de fuite dans un aéronef, comportant :

   - au moins un dispositif d'acquisition (3) destiné à être installé sur au moins une zone d'intérêt de l'aéronef (11), ledit au moins un dispositif d'acquisition (3) étant configuré pour acquérir des données relatives à des bruits courants dans ladite zone d'intérêt ainsi que des données relatives à un gradient de pression courant suivant une pluralité de gradients de pression opérationnels représentatifs des différentes phases du vol, entre la cabine de l'aéronef et l'extérieur, et
   - un dispositif de surveillance (5) configuré pour contrôler l'acquisition des données par ledit au moins un dispositif d'acquisition et pour recevoir lesdites données d'acquisition afin de détecter tout bruit de fuite dans ladite au moins une zone d'intérêt, ledit dispositif de surveillance (5) étant configuré pour associer les données d'acquisition relatives aux bruits courants avec celles relatives au gradient de pression courant représentatif de la grandeur de pressurisation de la cabine, ledit dispositif de surveillance (5) étant configuré pour déclencher automatiquement l'enregistrement de bruits par ledit au moins un dispositif d'acquisition à des valeurs de gradients de pression prédéterminés représentatifs de la grandeur de pressurisation de la cabine.

2. Système de détection selon la revendication 1, **caractérisé en ce que** ledit au moins un dispositif d'acquisition (3) est connecté audit dispositif de surveillance (5) à travers un réseau (9) sans-fils.

**3.** Système de détection selon la revendication 1 ou 2, **caractérisé en ce que** le dispositif de surveillance (5) est configuré pour réaliser une analyse spectrale des données d'acquisition relatives aux bruits courants formant ainsi des données spectrales d'acquisition,

- comparer lesdites données spectrales d'acquisition à des données spectrales de référence pour un même gradient de pression, et
- détecter en fonction de ladite comparaison, tout bruit de fuite dans ladite au moins une zone d'intérêt suivant la valeur de gradient de pression.

**4.** Système de détection selon l'une quelconque des revendications précédentes, **caractérisé en ce qu'**il comporte un ensemble de dispositifs d'acquisition (31R-34L) de bruit destinés à être installés sur un ensemble de zones d'intérêt (D1R-D4L) correspondantes de l'aéronef, chaque dispositif d'acquisition (3) comportant un microordinateur (41) et au moins un microphone (43), et **en ce qu'**au moins un des dispositifs d'acquisition est équipé d'un capteur (7) de pression pour mesurer la pression dans la cabine de l'aéronef, ledit dispositif d'acquisition équipé du capteur (7) de pression étant configuré pour déterminer chaque gradient de pression courant en comparant la pression courante à une pression initiale mesurée avant la pressurisation de la cabine.

**5.** Système de détection selon la revendication 4, **caractérisé en ce que** chaque dispositif d'acquisition comporte un ensemble de microphones (43) destinés à être agencés selon différents emplacements de contrôles de la zone d'intérêt et **en ce que** le dispositif de surveillance (5) est configuré pour localiser l'emplacement présentant une anomalie en fonction des données d'acquisition de bruits provenant des différents microphones.

**6.** Système de détection selon la revendication 4 ou 5, **caractérisé en ce que** ledit dispositif de surveillance (5) comporte une interface graphique (57) configurée pour indiquer la configuration de l'installation des dispositifs d'acquisition (3) et microphones (43) sur les différentes zones d'intérêt de l'aéronef ainsi que la connexion au réseau (9) et l'opérabilité de chacun des dispositifs d'acquisition et de chacun des microphones.

**7.** Système de détection selon l'une quelconque des revendications précédentes, **caractérisé en ce que** chaque zone d'intérêt de l'aéronef correspond à une zone quelconque parmi les zones suivantes : porte passagers, porte cargo, fenêtre coulissante en cockpit, ainsi que toute zone comportant un élément traversant une partie pressurisée de l'aéronef.

**8.** Système de détection selon l'une quelconque des revendications 4 à 7, **caractérisé en ce qu'**il comporte un support (61) avec des bras articulés (63), ledit support étant destiné à être fixé sur la zone d'intérêt de l'aéronef et chaque bras articulé étant destiné à supporter un microphone (43).

**9.** Procédé de détection de bruit de fuite dans un aéronef, comportant les étapes suivantes :

- déclenchement automatique de l'enregistrement de bruits à des valeurs de gradients de pression prédéterminés représentatifs de la grandeur de pressurisation de la cabine,
- acquisition des données relatives à des bruits courants dans au moins une zone d'intérêt de l'aéronef ainsi que des données relatives à un gradient de pression courant suivant une pluralité de gradients de pression opérationnels représentatifs des différentes phases de vol, entre la cabine de l'aéronef et l'extérieur, et
- contrôle de l'acquisition des données et réception desdites données d'acquisition permettant de détecter tout bruit de fuite dans ladite au moins une zone d'intérêt, les données d'acquisition relatives aux bruits courants étant associées avec celles relatives au gradient de pression courant représentatif de la grandeur de pressurisation de la cabine.

**10.** Procédé selon la revendication 9, **caractérisé en ce qu'**il comporte les étapes suivantes :

- installation d'au moins un dispositif d'acquisition de bruit sur au moins une zone d'intérêt dans la cabine de l'aéronef, ledit dispositif d'acquisition comportant un ensemble de microphones agencés selon différents emplacements de contrôles de la zone d'intérêt correspondante,
- pressurisation de la cabine de l'aéronef selon une suite de gradients de pression,
- contrôle dudit au moins dispositif d'acquisition avec un dispositif de surveillance depuis l'extérieur de l'aéronef, ledit dispositif de surveillance étant connecté audit dispositif d'acquisition via un réseau, et
- analyse des données d'acquisition par le dispositif d'acquisition ou le dispositif de surveillance afin de détecter tout bruit de fuite dans les zones d'intérêt suivant différentes valeurs de gradient de pression.

**11.** Procédé de détection selon la revendication 10, **caractérisé en ce que** l'analyse des données d'acquisition comporte une corrélation des données d'acquisition avec des données de référence comprenant les étapes suivantes :

- association des données d'acquisition relatives aux bruits courants avec celles relatives au gradient de pression courant représentatif d'une grandeur de pressurisation de la cabine,
- réalisation d'une analyse spectrale des données d'acquisition relatives aux bruits courants formant ainsi des données spectrales d'acquisition,
- comparaison desdites données spectrales d'acquisition à des données spectrales de référence, et
- détection en fonction de ladite comparaison, tout bruit de fuite dans ladite au moins une zone d'intérêt suivant au moins une valeur de gradient de pression.

**Patentansprüche**

**1.** System zur Erkennung von Leckagegeräusch in einem Luftfahrzeug, das aufweist:

- mindestens eine Erfassungsvorrichtung (3), die dazu bestimmt ist, in mindestens einem interessierenden Bereich des Luftfahrzeugs (11) eingebaut zu werden, wobei die mindestens eine Erfassungsvorrichtung (3) konfiguriert ist, Daten bezügliche aktueller Geräusche im interessierenden Bereich sowie Daten bezüglich eines aktuellen Druckgradienten gemäß einer Vielzahl von operativen Druckgradienten, die für die verschiedenen Phasen des Flugs repräsentativ sind, zwischen der Kabine des Luftfahrzeugs und der Außenumgebung zu erfassen, und
- eine Überwachungsvorrichtung (5), die konfiguriert ist, die Erfassung der Daten durch die mindestens eine Erfassungsvorrichtung zu kontrollieren und die Erfassungsdaten zu empfangen, um jedes Leckagegeräusch in dem mindestens einen interessierenden Bereich zu erkennen, wobei die Überwachungsvorrichtung (5) konfiguriert ist, die Erfassungsdaten bezüglich der aktuellen Geräusche mit denjenigen bezüglich des aktuellen Druckgradienten zu verbinden, der für die Druckbelüftungsgröße der Kabine repräsentativ ist, wobei die Überwachungsvorrichtung (5) konfiguriert ist, automatisch das Speichern von Geräuschen durch die mindestens eine Erfassungsvorrichtung bei vorbestimmten Werten von Druckgradienten auszulösen, die für die Druckbelüftungsgröße der Kabine repräsentativ sind.

**2.** Erkennungssystem nach Anspruch 1, **dadurch gekennzeichnet, dass** die mindestens eine Erfassungsvorrichtung (3) über ein drahtloses Netzwerk (9) mit der Überwachungsvorrichtung (5) verbunden ist.

**3.** Erkennungssystem nach Anspruch 1 oder 2, **dadurch gekennzeichnet, dass** die Überwachungsvorrichtung (5) konfiguriert ist, eine Spektralanalyse der Erfassungsdaten bezüglich der aktuellen Geräusche durchzuführen, wodurch Erfassungsspektraldaten gebildet werden,

- die Erfassungsspektraldaten mit Bezugsspektraldaten für einen gleichen Druckgradienten zu vergleichen, und
- abhängig von dem Vergleich jedes Leckagegeräusch in dem mindestens einen interessierenden Bereich gemäß dem Druckgradientenwert zu erkennen.

**4.** Erkennungssystem nach einem der vorhergehenden Ansprüche, **dadurch gekennzeichnet, dass** es eine Gruppe von Geräuscherfassungsvorrichtungen (31R-34L) aufweist, die dazu bestimmt sind, in einer Gruppe von entsprechenden interessierenden Bereichen (D1R-D4L) des Luftfahrzeugs eingebaut zu werden, wobei jede Erfassungsvorrichtung (3) einen Mikrocomputer (41) und mindestens ein Mikrofon (43) aufweist, und dass mindestens eine der Erfassungsvorrichtungen mit einem Drucksensor (7) ausgestattet ist, um den Druck in der Kabine des Luftfahrzeugs zu messen, wobei die mit dem Drucksensor (7) ausgestattete Erfassungsvorrichtung konfiguriert ist, jeden aktuellen Druckgradienten zu bestimmen, indem sie den aktuellen Druck mit einem vor der Druckbelüftung in der Kabine gemessenen Anfangsdruck vergleicht.

**5.** Erkennungssystem nach Anspruch 4, **dadurch gekennzeichnet, dass** jede Erfassungsvorrichtung eine Gruppe von Mikrofonen (43) aufweist, die dazu bestimmt sind, gemäß verschiedenen Kontrollstellen des interessierenden Bereichs angeordnet zu werden, und dass die Überwachungsvorrichtung (5) konfiguriert ist, abhängig von den Erfassungsdaten von von den verschiedenen Mikrofonen kommenden Geräuschen die eine Anomalie aufweisende Stelle zu lokalisieren.

**6.** Erkennungssystem nach Anspruch 4 oder 5, **dadurch gekennzeichnet, dass** die Überwachungsvorrichtung (5) eine grafische Schnittstelle (57) aufweist, die konfiguriert ist, die Konfiguration des Einbaus der Erfassungsvorrichtungen (3) und Mikrofone (43) in den verschiedenen interessierenden Bereichen des Luftfahrzeugs sowie die Verbindung mit dem Netzwerk (9) und die Betriebsfähigkeit jeder der Erfassungsvorrichtungen und jedes der Mikrofone anzuzeigen.

7. Erkennungssystem nach einem der vorhergehenden Ansprüche, **dadurch gekennzeichnet, dass** jeder interessierende Bereich des Luftfahrzeugs einem beliebigen Bereich unter den folgenden Bereichen entspricht: Passagiertür, Frachttür, Schiebefenster im Cockpit, sowie jeder Bereich, der ein Element aufweist, das einen druckbelüfteten Teil des Luftfahrzeugs durchquert.

8. Erkennungssystem nach einem der Ansprüche 4 bis 7, **dadurch gekennzeichnet, dass** es einen Träger (61) mit Gelenkarmen (63) aufweist, wobei der Träger dazu bestimmt ist, am interessierenden Bereich des Luftfahrzeugs befestigt zu werden, und jeder Gelenkarm dazu bestimmt ist, ein Mikrofon (43) zu tragen.

9. Verfahren zur Erkennung von Leckagegeräusch in einem Luftfahrzeug, das die folgenden Schritte aufweist:

- automatisches Auslösen des Speicherns von Geräuschen bei vorbestimmten Druckgradientenwerten, die für die Druckbelüftungsgröße der Kabine repräsentativ sind,
- Erfassung der Daten bezüglich aktueller Geräusche in mindestens einem interessierenden Bereich des Luftfahrzeugs sowie der Daten bezüglich eines aktuellen Druckgradienten gemäß einer Vielzahl von operativen Druckgradienten, die für die verschiedenen Flugphasen repräsentativ sind, zwischen der Kabine des Luftfahrzeugs und der Außenumgebung, und
- Kontrolle der Erfassung der Daten und Empfang der Erfassungsdaten, was es ermöglicht, jedes Leckagegeräusch in dem mindestens einen interessierenden Bereich zu erkennen, wobei die Erfassungsdaten bezüglich der aktuellen Geräusche mit denjenigen verbunden sind, die sich auf den aktuellen Druckgradienten beziehen, der für die Druckbelüftungsgröße der Kabine repräsentativ ist.

10. Verfahren nach Anspruch 9, **dadurch gekennzeichnet, dass** es die folgenden Schritte aufweist:

- Einbau mindestens einer Geräuscherfassungsvorrichtung in mindestens einem interessierenden Bereich in der Kabine des Luftfahrzeugs, wobei die Erfassungsvorrichtung eine Gruppe von Mikrofonen aufweist, die gemäß verschiedenen Kontrollstellen des entsprechenden interessierenden Bereichs angeordnet sind,
- Druckbelüftung der Kabine des Luftfahrzeugs gemäß einer Folge von Druckgradienten,
- Kontrolle der mindestens einen Erfassungsvorrichtung mit einer Überwachungsvorrichtung von außerhalb des Luftfahrzeugs, wobei die Überwachungsvorrichtung über ein Netzwerk mit der Erfassungsvorrichtung verbunden ist, und
- Analyse der Erfassungsdaten durch die Erfassungsvorrichtung oder die Überwachungsvorrichtung, um jedes Leckagegeräusch in den interessierenden Bereichen gemäß verschiedenen Druckgradientenwerten zu erkennen.

11. Erkennungsverfahren nach Anspruch 10, **dadurch gekennzeichnet, dass** die Analyse der Erfassungsdaten eine Korrelation der Erfassungsdaten mit Bezugsdaten aufweist, die die folgenden Schritte enthält:

- Verbindung der Erfassungsdaten bezüglich der aktuellen Geräusche mit denjenigen bezüglich des aktuellen Druckgradienten, der für eine Druckbelüftungsgröße der Kabine repräsentativ ist,
- Durchführung einer Spektralanalyse der Erfassungsdaten bezüglich der aktuellen Geräusche, wodurch Erfassungsspektraldaten gebildet werden,
- Vergleich der Erfassungsspektraldaten mit Bezugsspektraldaten, und
- Erkennung, abhängig von dem Vergleich, jedes Leckagegeräuschs in dem mindestens einen interessierenden Bereich gemäß mindestens einem Druckgradientenwert.

**Claims**

1. Detection system for detecting leak noise in an aircraft, comprising:

- at least one acquisition device (3) intended to be installed in at least one area of interest of the aircraft (11), said at least one acquisition device (3) being configured to acquire data in relation to current noises in said area of interest and data in relation to a current pressure gradient from among a plurality of operational pressure gradients representative of various phases of the flight, between a cabin of the aircraft and outside, and
- a monitoring device (5) configured to control the acquisition of the data by said at least one acquisition device and to receive said acquisition data in order to detect any leak noise in said at least one area of interest, said monitoring device (5) being configured to associate the acquisition data in relation to the current noises with those in relation to the current pressure gradient representative of the level of pressurization of the cabin, said monitoring device (5) being configured to automatically trigger the recording of noises by the at least one acquisition device at predetermined pressure gradient values representative of the level of pressurization of the cabin.

2. Detection system according to claim 1, **characterized in that** said at least one acquisition device (3) is connected to said monitoring device (5) through a wireless network (9).

3. Detection system according to claim 1 or 2, **characterized in that** the monitoring device (5) is configured to perform spectral analysis of the acquisition data in relation to the current noises, thus forming acquisition spectral data,

   - compare said acquisition spectral data with reference spectral data for one and same pressure gradient, and
   - detect, on a basis of said comparison, any leak noise in said at least one area of interest in line with the pressure gradient.

4. Detection system according to any preceding claims, **characterized in that** it further comprises a set of noise acquisition devices (31R-34L) intended to be installed in a set of corresponding areas of interest (DIR-D4L) of the aircraft, each acquisition device (3) comprising a microcomputer (41) and at least one microphone (43), and **in that** at least one of the acquisition devices is equipped with a pressure sensor (7) for measuring a pressure in the cabin of the aircraft, said acquisition device equipped with the pressure sensor (7) being configured to determine each current pressure gradient by comparing the current pressure with an initial pressure measured before the pressurization of the cabin.

5. Detection system according to claim 4, **characterized in that** each acquisition device comprises a set of microphones (43) intended to be arranged at various supervision locations of the area of interest, and **in that** the monitoring device (5) is configured to locate the location exhibiting an anomaly on a basis of the noise acquisition data coming from various microphones.

6. Detection system according to claim 4 or 5, **characterized in that** said acquisition device (5) comprises a graphical interface (57) configured to indicate the configuration of the installation of the acquisition devices (3) and microphones (43) in the various areas of interest of the aircraft, as well as the connection to the network (9) and the operability of each of the acquisition devices and of each of the microphones.

7. Detection system according to any of the preceding claims, **characterized in that** each area of interest of the aircraft corresponds to any area from among the following areas: passenger door, cargo door, cockpit sliding window, and any area having an element that passes through a pressurized section of the aircraft.

8. Detection system according to any of claims 4 to 7, **characterized in that** it further comprises a support (61) having articulated arms (63), said support being configured to be attached to the area of interest of the aircraft and each articulated arm being configured to support a microphone (43).

9. Method for detecting leak noise in an aircraft, comprising the following steps:

   - automatic triggering of the recording of noises at predetermined pressure gradient values representative of the level of pressurization of the cabin,
   - acquiring data in relation to current noises in at least one area of interest of the aircraft and data in relation to a current pressure gradient from among a plurality of operational pressure gradients representative of various phases of a flight, between a cabin of the aircraft and outside, and
   - controlling the acquisition of the data and receiving of said acquisition data, making it possible to detect any leak noise in said at least one area of interest, the acquisition data in relation to the current noises being associated with those in relation to the current pressure gradient representative of the level of pressurization of the cabin.

**10.** Method according to claim 9, **characterized in that** it further comprises the following steps:

- installing at least one noise acquisition device in at least one area of interest in the cabin of the aircraft, said acquisition device comprising a set of microphones arranged at various supervision locations of the corresponding area of interest,
- pressurizing the cabin of the aircraft in accordance with a series of pressure gradients,
- controlling said at least one acquisition device with a monitoring device from outside the aircraft, said monitoring device being connected to said acquisition device via a network, and
- analyzing the acquisition data using the acquisition device or the monitoring device in order to detect any leak noise in the areas of interest in line with various pressure gradient values.

**11.** Detection method according to claim 10, **characterized in that** the analysis of the acquisition data comprises a correlation of the acquisition data with reference data, comprising the following steps:

- associating the acquisition data in relation to the current noises with those in relation to the current pressure gradient representative of a cabin pressurization level,
- performing a spectral analysis of the acquisition data in relation to the current noises, thus forming acquisition spectral data,
- comparing said acquisition spectral data with reference spectral data, and
- detecting, based on said comparison, any leak noise in said at least one area of interest in line with at least one pressure gradient value.

**Fig. 1**

**Fig. 2**

Fig. 3

**Fig. 4**

**Fig. 5**

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2016091387 A
- WO 2009068057 A